# EUROPEAN PATENT SPECIFICATION

(11) **EP 2 003 915 B1**
(45) Date of publication and mention of the grant of the patent: **08.06.2011**
(21) Application number: 07011458.2
(22) Date of filing: 12.06.2007
(51) Int. Cl.: H04W 36/08

(54) **Method for determining if a handover needs to be executed for a mobile terminal of a wireless cellular telecommunication network from a first base station to a second base station**
Verfahren zur Bestimmung, ob eine Weiterreichung für ein mobiles Endgerät eines drahtlosen zellulären Telekommunikationsnetzwerks von einer ersten Basisstation an eine zweite Basisstation ausgeführt werden muss
Procédé pour déterminer si un transfert doit être exécuté pour un terminal mobile d'un réseau de télécommunication cellulaire sans fil d'une station de base principale vers une station de base secondaire

(43) Date of publication of application: 17.12.2008
(60) Divisional application: 11161194.3
(73) Proprietor: Mitsubishi Electric R&D Centre Europe B.V., 1119 NS Schiphol Rijk (NL); MITSUBISHI ELECTRIC CORPORATION, Chiyoda-ku Tokyo 100-8310 (JP)
(72) Inventor: Voyer, Nicolas, 35708 Rennes Cedex 07 (FR); Bonneville, Hervé, 35708 Rennes Cedex 07 (FR)
(74) Representative: Maillet, Alain

(56) References cited:
- US-A1- 2003 129 989
- US-A1- 2003 190 916
- "TR 25.912, Feasibility Study for Evolved UTRA and UTRAN, Release 7" 3RD GENERATION PARTNERSHIP PROJECT (3GPP); TECHNICAL REPORT (TR), XX, XX, vol. 25.912, no. v020, 12 June 2006 (2006-06-12), pages 1-57, XP002411616

## Description

The present invention relates to a method for determining if a handover needs to be executed for a mobile terminal of a wireless cellular telecommunication network from a first base station to a second base station.

Classical wireless cellular telecommunication networks are composed of numerous base stations which cover individually one or multiple cells.

A cell is an area, where a signal broadcasted by one base station, is received above a given threshold. Each base station is able to identify plural mobile terminals, as the base station allocates, to each mobile terminal located in the cell it manages, a short identifier that is unique in the cell.

Neighbour cells have different identifiers. Each base station broadcasts a signal representative of the identifier of the cell it manages so as to avoid any ambiguity of the origin of the signals when a mobile terminal detects signals transferred by different base stations.

When a mobile terminal moves from one cell to another cell, it can then measure the signal representative of the identifier of the other cell, identify the cell, and inform the network about this. The network can then prepare a handover, so that signals transferred to and/or by the mobile terminal are carried by the base station which manages the newly discovered cell, rather than from the base station which manages the previous cell the mobile terminal was located in.

The above-mentioned handover mechanism is known under the name MAHO standing for Mobile Assisted Handover.

That mechanism is optimised if each base station broadcasts, in the cell it manages, a list of neighbour cell identifiers to the mobile terminals located in its cell.

MAHO system was initially developed for the first generations of wireless cellular telecommunication networks, which are mainly composed of macro-cells, i.e. large cells that covers, multiple tens of km².

With large size cells, the list of neighbour cells, that is broadcasted by the base station in the cell it manages, has a reasonable size. The mobile terminals can focus their measurement and reporting efforts only on the meaningful cells.

Today, smaller size cells are introduced. These cells are named micro-cells, pico-cells, femto-cells. MAHO system is also used for these cells. Nowadays, third generation of wireless cellular telecommunication networks is typically built with hierarchical cell structure (HCS). Some frequencies are devoted to high velocity mobile terminals for which macro-cells are preserved, some other frequencies are devoted to low velocity and/or high data rate mobile terminals for which pica-cells are used.

Micro-cells, pico-cells, femto-cell are cells managed by base stations which may be installed into homes independently from each other. As example, these base stations can be installed by the occupants of the homes without considering if there are some neighbour cells or if cells overlap each other.

Such unorganized installation of base stations makes difficult to allocate different cell identifiers to neighbour cells.

A method for handover in the prior art is discused in US 2003/0190916 A1.

The aim of the invention is therefore to propose a method and a device, which enable to determine if a handover needs to be executed for a mobile terminal of a wireless cellular telecommunication network from a first base station to a second base station without using different cells identifiers of neighbour cells.

To that end, the present invention concerns a method for determining if a handover needs to be executed for a mobile terminal of a wireless cellular telecommunication network from a first base station to a second base station, the mobile terminal being involved in an ongoing communication through the first base station, characterised in that the method comprises the steps of:
- obtaining variation of a first signal related to the ongoing communication,
- obtaining variation of a second signal transferred by the first base station and by the second base station,
- determining that a handover needs to be executed if the variation of the first signal and the variation of the second signal are different.

Thus, it is possible to determine if a handover needs to be executed for a mobile terminal of a wireless cellular telecommunication network from a first base station to a second base station without using different cells identifiers of neighbour cells.

When the mobile terminal is moving away from the first base station, the received power level of the second signal transferred by the first base station decreases and the received power level of the first signal transferred and/or received by the first base station decreases.

When the mobile terminal is approaching the second base station, the received power level of the second signal transferred by the second base station increases and the received power level of the first signal transferred and/or received by the first base station decreases as the mobile terminal is still involved into a communication with a remote telecommunication device through the base station.

The difference of variations of first and second signals can then be used for determining if a handover needs to be executed for the mobile terminal.

According to a particular feature, the method is executed by the mobile terminal.

Thus, if the wireless cellular telecommunication uses Frequency Division Duplex scheme, the present invention is not disturbed by any fluctuation between the downlink and the uplink channels.

According to a particular feature, the variation of the first signal is obtained from measurements, by the mobile terminal, of the received power of a signal representative of data received from the first base station and the variation of the second signal is obtained from measurements, by the mobilc terminal, of the received power of the second signal received from the first and the second base stations.

Thus, if the wireless cellular telecommunication uses Frequency Division Duplex scheme, the present invention is not disturbed by any fluctuation between the downlink and the uplink channels.

According to a particular feature, the method is executed by the first base station.

Thus, the tasks to be handled by the mobile terminal are reduced.

According to a particular feature, the variation of the first signal is obtained from measurements, by the mobile terminal, of the received power of a signal representative of data received from the first base station and the variation of the second signal is obtained from measurements, by the mobile terminal, of the received power of the second signal received from the first and the second base stations, the measurements executed by the mobile terminal being reported by the mobile terminal to the first base station.

Thus, if the wireless cellular telecommunication uses Frequency Division Duplex scheme, the present invention is not disturbed by any fluctuation between the downlink and the uplink channels.

According to a particular feature, the variation of the first signal is obtained from measurements, by the first base station, of the received power of a signal representative of data received from the mobile terminal and the variation of the second signal is obtained from measurements, by the mobile terminal, of the received power of the second signal received from the first and the second base stations, the measurements executed by the mobile terminal being reported by the mobile terminal to the first base station.

Thus, if the wireless cellular telecommunication uses Time Division Duplex scheme, the present invention takes advantage of the stability of the channel fluctuation between the downlink and the uplink channel.

The present invention concerns also a device for determining if a handover needs to be executed for a mobile terminal of a wireless cellular telecommunication network from a first base station to a second base station, the mobile terminal being involved in an ongoing communication through the first base station, characterised in that the device for determining if a handover needs to be executed comprises:
- means for obtaining variation of a first signal related to the ongoing communication,
- means for obtaining variation of a second signal transferred by the first base station and by the second base station,
- means for determining that a handover needs to be executed if the variation of the first signal and the variation of the second signal are different.

Thus, it is possible to determine if a handover needs to be executed for a mobile terminal of a wireless cellular telecommunication network from a first base station to a second base station without using different cells identifiers of neighbour cells.

According to a particular feature, the device for determining if a handover needs to be executed is included in the mobile terminal or is included in the base station.

Thus, if the wireless cellular telecommunication uses Frequency Division Duplex scheme, the present invention is not disturbed by any fluctuation between the downlink and the uplink channel.

Thus, if the wireless cellular telecommunication uses Time Division Duplex scheme, the present invention takes advantage of the stability of the channel fluctuation between the downlink and the uplink channel.

According to still another aspect, the present invention concerns a computer program which can be directly loadable into a programmable device, comprising instructions or portions of code for implementing the steps of the method according to the invention, when said computer program is executed on a programmable device.

Since the features and advantages, related to the computer program, are the same as those set out above related to the method and device according to the invention, they will not be repeated here.

According to still another aspect, the present invention concerns a message transferred by a mobile terminal to a base station of a wireless cellular telecommunication network through which the mobile terminal is involved in an ongoing communication according to claim 11.

Thus, the message contains an information representative of the neighbouring of cells managed by at least another base station, without the need for identifying the other base station or the cell managed by the other base station. The measurement time is reduced and the need to plan the identification of base stations or cells managed by base stations is reduced.

According to a particular feature, the at least one information is a measurement of the received power of the signal transferred by the base station and the other base station and the message further comprises another measurement of the received power of another signal related to the ongoing communication.

Thus, the message contains information representative of neighbouring conditions of the mobile terminal with the base station and the other base station. The message contains all the information enabling the base station to determine if the mobile terminal is moving from the cell managed by the base station to another cell managed by another base station.

According to a particular feature, the at least one information is representative of a variation of the received power of the signal transferred by the base station and the other base station.

Thus, the process of the message by the base station, is minimised.

According to a particular feature, the message further comprises another information representative of a variation of the received power of another signal related to the ongoing communication.

Thus, the message contains all the information enabling the base station to determine if the mobile terminal is moving from the cell managed by the base station to another cell managed by another base station and the process of the message by the base station is minimised.

According to a particular feature, the at least one information indicates that the difference between the variation of the received power of the signal transferred by the base station and the other base station and the variation of the received power of another signal related to the ongoing communication exceeds a predetermined threshold.

Thus, the message contains all the information enabling the base station to determine if the mobile terminal is moving from the cell managed by the base station to another cell managed by another base station and the process of the message by the base station is minimised.

The characteristics of the invention will emerge more clearly from a reading of the following description of an example embodiment, the said description being produced with reference to the accompanying drawings, among which :
Fig. 1 is a diagram representing the architecture of a wireless cellular telecommunication network in which the present invention is implemented ;
Fig. 2 is an example of variation of the power level of a common signal received by a mobile terminal and of variation of the power level of a data signal used, according to the present invention, for determining if a handover needs to be executed for the mobile terminal ;
Fig. 3 is a block diagram of a base station according to the present invention ;
Fig.4 is a block diagram of a mobile terminal according to the present invention;
Fig. 5 depicts an algorithm executed by a mobile terminal when the present invention is implemented in the mobile terminal;
Fig. 6 depicts an algorithm executed by a base station when the present invention is implemented in the base station.

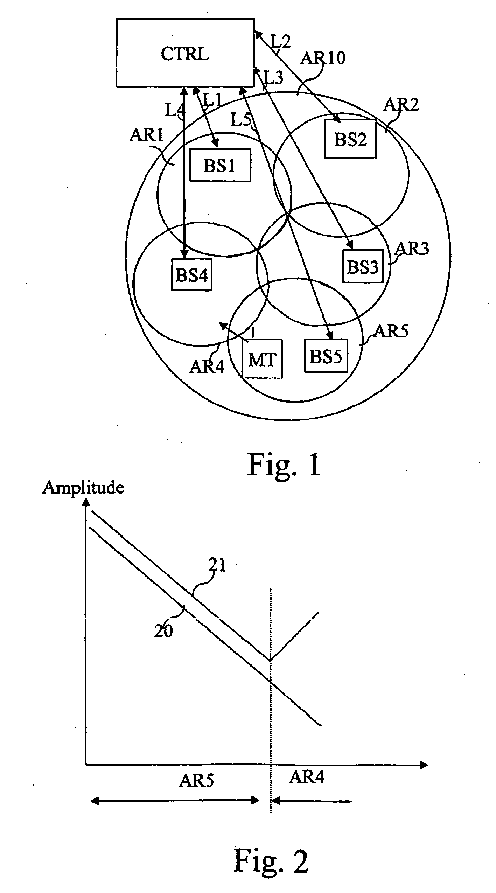

**Fig. 1** is a diagram representing the architecture of a wireless cellular telecommunication network, in which the present invention is implemented.

In the cellular telecommunication network, a controller CTRL controls base stations BS1 to BS5 of an area AR10. The area AR10 is composed of plural areas AR1 to AR5 managed by the respective base stations BS1 to BS5. The areas AR1 to AR5 are named cells in wireless cellular telecommunication networks.

The base station BS1 transfers and/or receives signals or messages through the cell AR1 it manages, the base station BS2 transfers and/or receives signals or messages through the cell AR2 it manages, the base station BS3 transfers and/or receives signals or messages through the cell AR3 it manages, the base station BS4 transfers and/or receives signals or messages through the cell AR4 it manages and the base station BS5 transfers and/or receives signals or messages through the cell AR5 it manages.

The cells AR1 to AR5, which compose the area AR10, have the same identifier.

Each base station BS1 to BS5 transfers in its respective cell AR1 to AR5 it manages, a first signal. A first signal is a signal representative of data transferred to a mobile terminal MT which is located in the cell AR managed by the base station BS or is a signal representative of data received from a mobile terminal MT which is located in the cell AR managed by the base station BS.

Data are related to an ongoing communication in which the mobile terminal MT is involved through the base station BS.

Each base station BS1 to BS5 transfers in its respective cell AR1 to AR5 it manages the same second signal on a Broadcast Control Channel (BCCH). A second signal is, as example and in a non limitative way, a signal representative of the identifier of the cell AR of the base station BS.

As the cells AR1 to AR5 share the same identifier, each second signal transferred by one base station BS is identical to each second signal transferred by each of the other base stations BS. In a preferred implementation, the base stations BS1 to BS5 are synchronised and each second signal transferred by each base station BS1 to BS5 is or is almost superposed in the time dimension.

The second signals transferred in the Broadcast Control Channel are named hereinafter common signals.

In the Fig. 1, only five base stations BS1 to BS5 and cells AR1 to AR5 are shown for the sake of clarity but the area AR10 comprises a more important number of cells AR of base stations BS.

The controller CTRL is linked to the base stations BS1 to BS5 through a telecommunication network. The telecommunication network is a dedicated wired network or a public network like a public switched network or an IP based network or a wireless network or an Asynchronous Transfer Mode network or a combination of above cited networks.

The controller CTRL is linked to the base station BS1 through a link L1, the controller CTRL is linked to the base station BS2 through a link L2, the controller CTRL is linked to the base station BS3 through a link L3, the controller CTRL is linked to the base station BS4 through a link L4 and the controller CTRL is linked to the base station BS5 through a link L5.

Each link L1 to L5 enables, for each mobile terminal MT comprised in the virtual cell AR10, the setup of a connection dedicated to the mobile terminal MT if needed.

It has to be noted here that only one area AR10 is shown in the Fig. 1 for the sake of clarity, but the controller CTRL may manage plural areas.

Only one controller CTRL is shown in the Fig. 1 but the wireless cellular telecommunication network may comprise a more important number of controllers CTRL.

In the Fig. 1, one mobile terminal MT is shown. The mobile terminal MT is located in the cell AR5 of the base station BS5 and is moving into the cell AR4 of the of the base station BS4.

Only one mobile terminal MT is shown in the Fig. 1, but we can understand that a more important number of mobile terminals MT are in the wireless cellular telecommunication network.

When the mobile terminal MT is located in a cell AR, the mobile terminal MT can establish or receive or continue a communication through the base station BS which manages the cell AR in which mobile terminal MT is located or can receive a paging notification message.

As the basc stations BS1 to BS5 transfer the same common signal, i.e. signal representative of the same identifier of cells AR1 to AR5, when a mobile terminal MT is located in the area AR10, the mobile terminal. MT can not identify, using the identifier of the cells AR1 to AR5 transferred in the Broadcast Control Channel, in which cell AR1 to AR5 the mobile terminal MT is located.

According to the invention, by monitoring the signal representative of data and the common signal, it is possible to distinguish if a handover needs to be executed for the mobile terminal MT, even though the mobile terminal MT can not distinguish the new cell AR it is entering in from the old cell AR in which is was located in, in the cvent that both cells AR share the same cell identifier.

Fig. 2 is an example of variation of the power level of a common signal reccivcd by a mobile terminal and of variation of the power level of a data signal used, according to the present invention, for determining if a handover needs to be executed for the mobile terminal.

The horizontal axis represents the displacement of the mobile terminal MT. The mobile terminal MT is moving from the cell AR5 to the cell AR4.

The mobile terminal MT is involved into a communication with a remote telecommunication device through the base station BS5.

The curve noted 20 shows the variation of the received power level of the data signal measured by the mobile terminal MT or by the base station BSS.

The curve noted 21 shows the variation of the received power level of the common signal measured by the mobile terminal MT.

When the mobile terminal MT is moving away from the base station BS5, the received power of the common signal transferred by the base station BS5 decreases and the received power of the data signal transferred and/or received by the base station BSS decreases.

When the mobile terminal MT is approaching the base station BS4, i.e. enters in the cell AR4, the received power of the common signal transferred by the base station BS4 increases and received power of the data signal transferred and/or received by the base station BS5 decreases as the mobile terminal MT is still involved into a communication with a remote telecommunication device through the base station BS5.

The difference of variations of the received power of the common signal and the data signal can then be used for determining if a handover needs to be executed for the mobile terminal MT between different cells AR within the area AR10, sharing a same cell identifier.

When a handover needs to be executed for the mobile terminal MT, a message is transferred to the controller CTRL.

In response to that message, the controller CTRL determines, for the mobile terminal MT concerned by the handover, a set of base stations BS among the base stations BS1 to BS5 which manage respectively the cells AR1 to AR5 comprised in the area AR10.

According to the example of the Fig. 1, a handover is needed for the mobile terminal MT within the area AR10. The mobile terminal MT is moving from the cell AR5 to the cell AR4. As the identifiers of the cells AR1 to AR5 arc identical, the controller CTRL is not able to determine if the mobile terminal MT is moving from the cell AR5 to the cell AR4 or if the mobile terminal MT is moving from the cell AR5 to the cell AR3.

As the cells AR3 and AR4 are closed to the cell AR5, the probability that the mobile terminal MT is entering in the cells AR3 and AR4 is higher than the probability that the mobile terminal MT is entering in the cells AR1 and AR2. The set of base stations BS, determined by the controller CTRL, comprises the base stations BS3 and BS4.

It has to be noted here that, in a variant, the set of base stations BS comprises all the base stations BS1 to BS5 which manage respectively the cells AR1 to AR5 comprised in the area AR10.

It has to be noted here that, the set of base stations BS is further reduced to another set of base stations BS which are not overloaded. A base station BS is, as example, overloaded when the number of mobile terminals MT, which are already located in the cell AR of the base station BS or the quantity of information transferred or expected to be transferred by the base station BS, exceeds a predetermined threshold.

In another implementation of the invention, the set of base stations BS is further reduced to the set of base stations BS for which the mobile terminal MT holds access rights. As example and in a non limitative way, the determined set of base stations BS contains only base stations BS which are owned by the owner of the mobile terminal MT.

As yet another example, the determined set of base stations BS also contains base stations BS not owned by the owner of the mobile terminal MT, but which access is opened to mobile terminals MT which have an allocated access right which is higher than or equal to a given threshold.

The controller CTRL sets up a connection with each base station BS of the set of base stations BS.

The controller CTRL sets up a connection dedicated to the mobile terminal MT on the link L3 with the base station BS3 and sets up a connection dedicated to the mobile terminal MT on the link L4 with the base station BS4.

The controller CTRL commands the transfer of a handover response message to the base station BS which sent the handover command message. According to the example of the Fig. 1, the controller CTRL commands the transfer of the handover response message to the base station BS which sent the handover command message i.e. the base station BS5.

The handover response message corresponds to an acknowledgement of the handover command message.

When data need to be transferred to a mobile terminal MT, the controller CTRL commands the transfer of the data to each base station BS identified in the set of base stations BS for the mobile terminal MT though the connections dedicated to the mobile terminal MT.

When data are transferred by the mobile terminal MT through one of the base station BS in the set of base stations BS, the controller CTRL commands the transfer of the data to other devices of the wireless cellular telecommunication network, not shown in the Fig. 1, through a data path dedicated to the mobile terminal MT which transferred the data.

The controller CTRL is then able to determine in which cell AR the mobile terminal MT is located as the base station BS4 which transferred the message can be identified.

The controller CTRL updates statistics related to handovers between the cell AR of the base station BS through which the message comprising data has been transferred by the mobile terminal MT and the origin base station BS.

The controller CTRL limits the set of base stations BS for the mobile terminal MT which transfers data to the base station BS which transferred the message.

As example, the controller CTRL limits the set of base stations BS for the mobile terminal MT to the base station BS4.

The controller CTRL releases each connection dedicated to the mobile terminal MT which transfers data with the base station BS or base stations BS which is or are no more included in the set of base stations BS for the mobile terminal MT which transfers data.

As example, the controller CTRL releases the connection dedicated to the mobile terminal MT on the link L3 with the base station BS3.

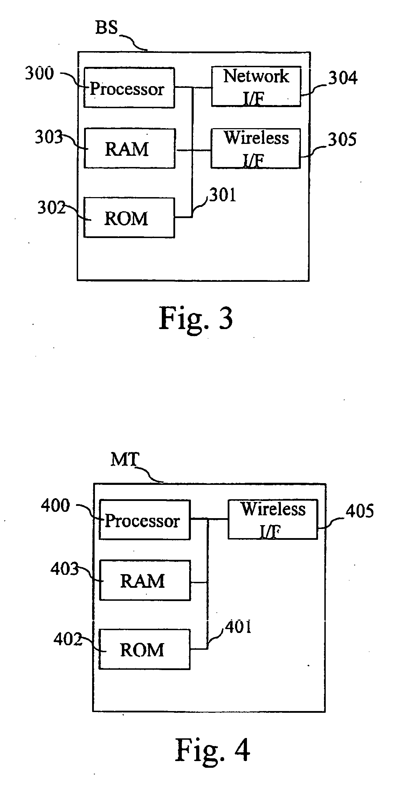

Fig. 3 is a block diagram of a base station according to the present invention.

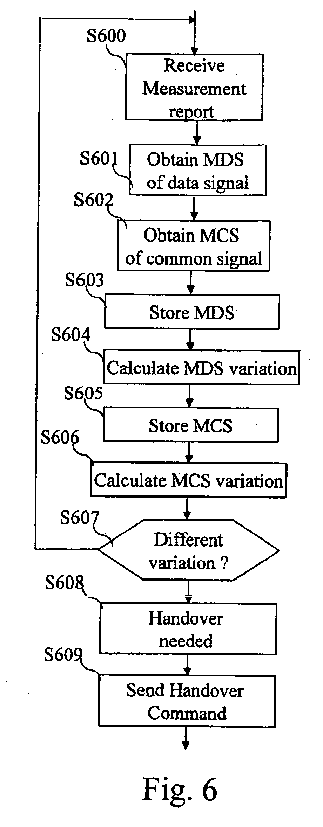

The base station BS has, for example, an architecture based on components connected together by a bus 301 and a processor 300 controlled by the program as disclosed in the Fig. 6.

The bus 301 links the processor 300 to a read only memory ROM 302, a random access memory RAM 303, a network interface I/F 304 and a wireless interface I/F 305.

The memory 303 contains registers intended to receive variables and the instructions of the program related to the algorithm as disclosed in the Fig. 6.

The processor 300 controls the operation of the network interface 304.

The read only memory 302 contains instructions of the programs related to the algorithm as disclosed in the Fig. 6, which are transferred, when the base station BS is powered on to the random access memory 303.

The base station BS is connected to the telecommunication network through the network interface 304. As example, the network interface 304 is a DSL (Digital Subscriber Line) modem, or an ISDN (Integrated Services Digital Network) interface, or a power line communication interface, etc.

Through such interface, the base station BS exchanges information with the Controller CTRL and other base stations BS of the wireless cellular telecommunication network.

The wireless interface 305 comprises means for transferring signal representative of data to the mobile terminals MT which are located in the cell AR of the base station BS. The wireless interface 305 comprises means for transferring common signal to the mobile terminals MT which are located in the cell AR of the base station BS. The wireless interface 305 comprises means for receiving signals representative of data or messages from the mobile terminals MT which are located in the cell AR of the base station BS. The wireless interface 305 comprises means for measuring the received power of the signals representative of data transferred by the mobile terminals MT which are locatcd in the cell AR of the base station BS.

**Fig.4** is a block diagram of a mobile terminal according to the present invention.

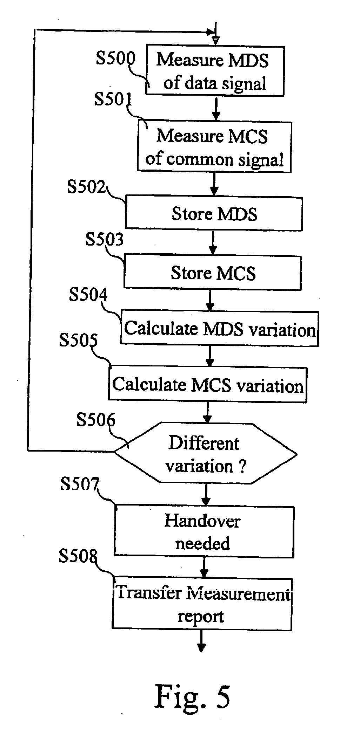

The mobile terminal MT has, for example, an architecture based on components connected together by a bus 401 and a processor 400 controlled by the program as disclosed in the Fig. 5.

The bus 401 links the processor 400 to a read only memory ROM 402, a random access memory RAM 403 and a wireless interface IF 405.

The memory 403 contains registers intended to receive variables and the instructions of the program related to the algorithm as disclosed in the Fig. 5.

The processor 400 controls the operation of the wireless interface 404.

The read only memory 402 contains instructions of the programs related to the algorithm as disclosed in the Fig. 5, which are transferred, when the base station BS is powered on to the random access memory 403.

The wireless interface 405 comprises means for transferring signal representative of data or messages to the base station BS which manages the cell AR the mobile terminal MT is located in. The wireless interface 405 comprises means for measuring the received power of the common signal transferred by each base station BS1 to BS5. The wireless interface 405 comprises means for receiving signal representative of data from the base station BS which manages the cell AR the mobilc terminal MT is located in. The wireless interface 405 comprises means for measuring the received power of the signal representative of data transferred by the base station BS which manages the cell AR the mobile terminal MT is located in.

Fig. 5 depicts an algorithm executed by a mobile terminal when the present invention is implemented in the mobile terminal.

The present algorithm is more precisely executed by the processor 400 of each mobile terminal MT.

At step S500, the processor 400 commands the wireless interface 405 in order to proceed to the measurement MDS of the received power of the signal representative of data transferred by the base station BS to the mobile terminal MT. The base station BS is the base station which manages the cell AR in which the mobile terminal MT is located.

At next step S501, the processor 400 commands the wireless interface 405 in order to proceed to the measurement MCS of the received power of the common signal transferred by base stations BS.

It has to be noted here that, the steps S500 and S501 are in a variant executed simultaneously.

At next step S502, the processor 400 stores the result of the measurement MDS in the RAM memory 403.

At next step S503, the processor 400 stores the result of the measurement MCS in the RAM memory 403.

At next step S504, the processor 400 calculates the variation of MDS measurements using the measurement MDS memorized at step S502 and former measurements MDS stored in the RAM memory 403.

At next step S505, the processor 400 calculates the variation of MCS measurements using the measurement MCS memorized at step S503 and former measurements MCS stored in the RAM memory 403.

At next step S506, the processor 400 checks if the calculated variation of MDS measurements is different from the calculated variation of MCS measurements.

Variations are different if they have different signs or if the difference of variations is upper than a predetermined threshold.

As example, the processor 400 checks if the calculated variation of MDS measurements is different from the calculated variation of MCS measurements by subtracting the calculated variation of MDS measurements from the calculated variation of MCS measurements, by taking the absolute value of the result of the subtraction and by comparing the absolute value of the result of the subtraction to the predetermined threshold.

If the calculated variations are not different, the processor 400 returns to step S500 and executes the loop constituted by the steps S500 to S506 as far as the variations are not different. Such case occurs when the mobile terminal MT is located in the cell AR5, as shown in the Fig. 2.

If the calculated variations are different, the processor 400 moves to step S507. As example, the calculated variations are different when the received power of the signal representative of data is decreasing and there is no variation of received power of the common signal or when the received power of the signal representative of data is decreasing and the received power of the common signal is increasing. Such case occurs when the mobile terminal MT is leaving the cell AR5 and is entering in the cell AR4, as shown in the Fig. 2.

At step S507, the processor 400 decides that a handover is needed as far as the variations of MDS and MCS are different.

At next step S508, the processor 400 commands the transfer, through the wireless interface 405, of a message to the base station BS5 representative of a request of a handover procedure establishment. The message is preferably a measurement report message which comprises information related to the received powers memorized at steps S502 or S503 or which comprises information related to the variations calculated at step S504 or S505. In a variant, the message indicates that the difference between the variations of MDS measurements and the variation of MCS measurements exceeds a predetermined threshold.

After that, the processor 400 returns to step S500.

**Fig. 6** depicts an algorithm executed by a base station when the present invention is implemented in the base station.

The present algorithm is more precisely executed by the processor 300 of each base station BS1 to BS5.

At step S600, the processor 300 detects the reception, by the wireless interface 305 of a message transferred by the mobile terminal MT. The message is a measurement report which comprises measurements MCS of the received power level of common signal measured by a mobile terminal MT which is located in the cell AR managed by the base station BS or comprises variation of the received power level of common signal calculated at step S505 of the Fig. 5.

In a variant, the measurement report comprises also measurement MDS, executed by the mobile terminal MT, of the received power level of the signal representative of data transferred by the base station BS or comprises variation of the received power level of signal representative of data calculated at step S504 of the Fig. 5.

In yet another variant, the message indicates that the difference between the variations of MDS measurements and the variation of MCS measurements exceeds a predetermined threshold.

At next step S601, the processor 300 obtains measurement MDS of the received power of the signal representative of data. The measurement of the received power of the signal representative of data is obtained from the wireless interface 405 which proceeds to some measurements MDS of the received power of the signal representative of data transferred by the mobile terminal MT and/or is obtained, according to the variant, from the measurement report received at step S600.

At next step S602, the processor 300 obtains the measurement MCS of the common signal from the measurement report received at step S600.

At next step S603, the processor 300 stores the result of the measurement MDS in the RAM memory 203.

At next step S604, the processor 300 calculates the variation of MDS measurements using the measurement MDS. obtained at step S602 and former measurements MDS stored in the RAM memory 303.

It has to be noted hcrc that, if the variation of MDS measurements is comprised in the measurement report, the processor 300 doesn't need to execute the steps S603 and S604.

At next step S605, the processor 300 stores the result of the measurement MCS in the RAM memory 203.

At next step S606, the processor 300 calculates the variation of MCS measurements using the measurement MCS obtained at step S602 and former measurements MCS stored in the RAM memory 303.

It has to be noted here that, if the variation of MCS measurements is comprised in the measurement report, the processor 300 doesn't need to execute the steps S605 and S606.

At next step S607, the processor 300 checks if the calculated variation of MDS measurements is different from the calculated variation of MCS measurements.

Variations are different if they have different signs or if the difference of variations is upper than a predetermined threshold.

As example, the processor 300 checks if the calculated variation of MDS measurements is different from the calculated variation of MCS measurements by subtracting the calculated variation of MDS measurements from the calculated variation of MCS measurements, by taking the absolute value of the result of the subtraction and by comparing the absolute value of the result of the subtraction to the predetermined threshold.

If the variations are not different, the processor 300 returns to step S600 and executes the loop constituted by the steps S600 to S607 as far as the variations are not different. Such case occurs when the mobile terminal MT is located in the cell AR5 as shown in the Fig. 2.

If the calculated variations are different, the processor 300 moves to step S607. As example, the calculated variations are different when the received power of the signal representative of data is decreasing and there is no variation of received power of the common signal or when the received power of the signal representative of data is decreasing and the received power of the common signal is increasing. Such case occurs when the mobile terminal MT is leaving the cell AR5 and is entering in the cell AR4 as shown in the Fig. 2.

At step S608, the processor 400 decides that a handover is needed as far as the variations of MDS and MCS are different.

It has to be noted here that, if the message received at step S600, is a message which indicates that the difference between the variations of MDS measurements and the variation of MCS measurements exceeds a predetermined threshold, the processor moves directly from step S600 to step S608.

At next step S609, the processor 300 transfers a handover command message to the controller CTRL which is representative of a request of a handover procedure establishment between the cells AR belonging to the area AR10 and sharing the same cell identifier.

After that, the processor 300 returns to step S600.

Naturally, many modifications can be made to the embodiments of the invention described above without departing from the scope of the present invention.

## Claims

1. Method for determining if a handover needs to be executed for a mobile terminal of a wireless cellular telecommunication network from a first base station to a second base station, the mobile terminal being involved in an ongoing communication through the first base station, **characterised in that** the method comprises the steps of:
- obtaining variation of the received power or a first signal related to the ongoing communication (S504),
- obtaining variation of the received power or a second signal transferred by the first base station and by the second base station (S505),
- determining that a handover needs to be executed if the variation of the the received power or first signal and the variation of the the recorved power or second signal are different (S506; S507).

2. Method according to claim 1, **characterised in that** the method is executed by the mobile terminal.

3. Method according to claim 2, **characterised in that** the variation of the first signal is obtained from measurements, by the mobile terminal, of the received power of a signal representative of data received from the first base station and the variation of the second signal is obtained from measurements, by the mobile terminal, of the received power of the second signal received from the first and the second base stations.

4. Method according to claim 1, **characterised in that** the method is executed by the first base station.

5. Method according to claim 4, **characterised in that** the variation of the first signal is obtained from measurements, by the mobile terminal, of the received power of a signal representative of data received from the first base station and the variation of the second signal is obtained from measurements, by the mobile terminal, of the received power of the second signal received from the first and the second base stations, the measurements executed by the mobile terminal being reported by the mobile terminal to the first base station.

6. Method according to claim 4, **characterised in that** the variation of the first signal is obtained from measurements, by the first base station, of the received power of a signal representative of data received from the mobile terminal and the variation of the second signal is obtained from measurements, by the mobile terminal, of the received power of the second signal received from the first and the second base stations, the measurements executed by the mobile terminal being reported by the mobile terminal to the first base station.

7. Device for determining if a handover needs to be executed for a mobile terminal of a wireless cellular telecommunication network from a first base station to a second base station, the mobile terminal being involved in an ongoing communication through the first base station, **characterised in that** the device for determining if a handover needs to be executed, comprises:
- means for obtaining variation of the received power or a first signal related to the ongoing communication (S504),
- means for obtaining variation of a the received power or second signal transferred by the first base station and by the second base station (S505),
- means for determining that a handover needs to be executed if the variation of the received power or the first signal and the variation of the received power or the second signal are different (S506 ; S507).

8. Device according to claim 7, **characterised in that** the device for determining if a handover needs to be executed is included in the mobile terminal.

9. Device according to claim 8, **characterised in that** the device for determining if a handover needs to be executed is included in the base station.

10. Computer program which can be directly loadable into a programmable device, comprising instructions or portions of code for implementing the steps of the method according to claims 1 to 6, when said computer program is executed on a programmable device.

11. Message for determining if a manpower needs to be executed for a mobile terminal of a wireless cellular telecommunication network from a first base station to a second base station transferred by the mobile terminal to the first base station through which the mobile terminal is involved in an ongoing communication, **characterised in that** the message comprises information representative of variation of the received power of a first signal related to the ongoing communication (S504) and information representative of variation of the received power of a second signal transferred by the first base station and by the second base station (S505).

## Patentansprüche

1. Verfahren zum Bestimmen, ob für ein mobiles Endgerät eines drahtlosen zellularen Telekommunikationsnetzes eine Übergabe von einer ersten Basisstation zu einer zweiten Basisstation ausgeführt werden muss, wobei das mobile Endgerät an einer fortdauernden Kommunikation durch die erste Basisstation beteiligt ist, **dadurch gekennzeichnet, dass** das Verfahren die folgenden Schritte aufweist:
- Erhalten einer Änderung der empfangenen Leistung eines ersten Signals in Bezug auf die fortdauernde Kommunikation (S504),
- Erhalten einer Änderung der empfangenen Leistung eines durch die erste Basisstation und durch die zweite Basisstation transferierten zweiten Signals (S505),
- Bestimmen, dass eine Übergabe ausgeführt werden muss, wenn die Änderung der empfangenen Leistung des ersten Signals und die Änderung der empfangenen Leistung des zweiten Signals unterschiedlich sind (S506; S507).

2. Verfahren nach Anspruch 1, **dadurch gekennzeichnet, dass** das Verfahren durch das mobile Endgerät ausgeführt wird.

3. Verfahren nach Anspruch 2, **dadurch gekennzeichnet, dass** die Änderung des ersten Signals aus Messungen der empfangenen Leistung eines Signals, das von der ersten Basisstation empfangene Daten darstellt, durch das mobile Endgerät erhalten wird und die Änderung des zweiten Signals aus Messungen der empfangenen Leistung des von der ersten und der zweiten Basisstation empfangenen zweiten Signals durch das mobile Endgerät erhalten wird.

4. Verfahren nach Anspruch 1, **dadurch gekennzeichnet, dass** das Verfahren durch die erste Basisstation ausgeführt wird.

5. Verfahren nach Anspruch 4, **dadurch gekennzeichnet, dass** die Änderung des ersten Signals aus Messungen der empfangenen Leistung eines Signals, das von der ersten Basisstation empfangene Daten darstellt, durch das mobile Endgerät erhalten wird und die Änderung des zweiten Signals aus Messungen der empfangenen Leistung des von der ersten und der zweiten Basisstation empfangenen zweiten Signals durch das mobile Endgerät erhalten wird, wobei die durch das mobile Endgerät ausgeführten Messungen durch das mobile Endgerät zu der ersten Basisstation berichtet werden.

6. Verfahren nach Anspruch 4, **dadurch gekennzeichnet, dass** die Änderung des ersten Signals aus Messungen der empfangenen Leistung eines Signals, das von dem mobilen Endgerät empfangene Daten darstellt, durch die erste Basisstation erhalten wird und die Änderung des zweiten Signals aus Messungen der empfangenen Leistung des von der ersten und der zweiten Basisstation empfangenen zweiten Signals durch das mobile Endgerät erhalten wird, wobei die durch das mobile Endgerät ausgeführten Messungen durch das mobile Endgerät zu der ersten Basisstation berichtet werden.

7. Vorrichtung zum Bestimmen, ob für ein mobiles Endgerät eines drahtlosen zellularen Telekommunikationsnetzes eine Übergabe von einer ersten Basisstation zu einer zweiten Basisstation ausgeführt werden muss, wobei das mobile Endgerät an einer fortdauernden Kommunikation durch die ersten Basisstation beteiligt ist, **dadurch gekennzeichnet, dass** die Vorrichtung zum Bestimmen, ob eine Übergabe ausgeführt werden muss, folgendes aufweist:
- eine Einrichtung zum Erhalten einer Änderung der empfangenen Leistung eines ersten Signals in Bezug auf die fortdauernde Kommunikation (S504),
- eine Einrichtung zum Erhalten einer Änderung der empfangenen Leistung eines durch die erste Basisstation und durch die zweite Basisstation transferierten zweiten Signals (S505),
- eine Einrichtung zum Bestimmen, dass eine Übergabe ausgeführt werden muss, wenn die Änderung der empfangenen Leistung des ersten Signals und die Änderung der empfangenen Leistung des zweiten Signals unterschiedlich sind (S506; S507).

8. Vorrichtung nach Anspruch 7, **dadurch gekennzeichnet, dass** die Vorrichtung zum Bestimmen, ob eine Übergabe ausgeführt werden muss, in dem mobilen Endgerät enthalten ist.

9. Vorrichtung nach Anspruch 8, **dadurch gekennzeichnet, dass** die Vorrichtung zum Bestimmen, ob eine Übergabe ausgeführt werden muss, in der Basisstation enthalten ist.

10. Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 6, wenn das Computerprogramm auf einer programmierbaren Vorrichtung ausgeführt wird.

11. Nachricht zum Bestimmen, ob für ein mobiles Endgerät eines drahtlosen zellularen Telekommunikationsnetzes eine Übergabe von einer ersten Basisstation zu einer zweiten Basisstation ausgeführt werden muss, welche Nachricht durch das mobile Endgerät zu der ersten Basisstation transferiert ist, durch welche das mobile Endgerät an einer fortdauernden Kommunikation beteiligt ist, **dadurch gekennzeichnet, dass** die Nachricht Information, die eine Änderung der empfangenen Leistung eines ersten Signals in Bezug auf die fortdauernde Kommunikation (S504) darstellt, und Information, die eine Änderung der empfangenen Leistung eines durch die erste Basisstation und durch die zweite Basisstation transferierten zweiten Signals (S505) darstellt, aufweist.

## Revendications

1. Méthode pour déterminer si un transfert de connexion doit être exécuté pour un terminal mobile d'un réseau de télécommunication cellulaire sans fil d'une première station de base à une seconde station de base, le terminal mobile étant impliqué dans une communication en cours à travers la première station de base, **caractérisée en ce que** la méthode comporte les étapes de :
- obtention de la variation de la puissance reçue d'un premier signal relatif à la communication en cours (S504),
- obtention de la variation de la puissance reçue d'un second signal transféré par la première station de base et par la seconde station de base (S505),
- détermination qu'un transfert doit être exécuté si la variation de la puissance reçue du premier signal et la variation de la puissance reçue du second signal sont différentes (S506, S507).

2. Méthode selon la revendication 1, **caractérisée en ce que** la méthode est exécutée par le terminal mobile.

3. Méthode selon la revendication 2, **caractérisée en ce que** la variation du premier signal est obtenue à partir de mesures, par le terminal mobile, de la puissance reçue d'un signal représentatif de données reçues de la station de la première base et la variation du second signal est obtenue à partir de mesures, par le terminal mobile, de la puissance reçue du second signal reçu de la première et de la seconde stations de base.

4. Méthode selon la revendication 1, **caractérisée en ce que** la méthode est exécutée par la première station de base.

5. Méthode selon la revendication 4, **caractérisée en ce que** la variation du premier signal est obtenue à partir de mesures, par le terminal mobile, de la puissance reçue d'un signal représentatif de données reçues de la station de la première base et la variation du second signal est obtenue à partir des mesures, par le terminal mobile, de la puissance reçue du second signal reçu de la première et de la seconde stations de base, les mesures exécutées par le terminal mobile étant rapportées par le terminal mobile à la station de la première base.

6. Méthode selon la revendication 4, **caractérisée en ce que** la variation du premier signal est obtenue à partir de mesures, par la station de la première base, de la puissance reçue d'un signal représentatif des données reçues du terminal mobile et la variation du second signal est obtenue à partir des mesures, par le terminal mobile, de la puissance reçue du second signal reçu de la première et de la seconde stations de base, les mesures exécutées par le terminal mobile étant rapportées par le terminal mobile à la station de la première base.

7. Dispositif pour déterminer si un transfert doit être exécuté pour un terminal mobile d'un réseau de télécommunication cellulaire sans fil d'une première station de base à une seconde station de base, le terminal mobile étant impliqué dans une communication en cours à travers la station de la première base, **caractérisé en ce que** le dispositif pour déterminer si un transfert doit être exécuté, comporte :
- des moyens pour obtenir la variation de la puissance reçue d'un premier signal relatif à la communication en cours (S504),
- des moyens pour obtenir la variation de la puissance reçue d'un second signal transféré par la première station de base et par la seconde station de base (S505),
- des moyens de déterminer qu'un transfert doit être exécuté si la variation de la puissance reçue du premier signal et la variation de la puissance reçue du second signal sont différentes (S506, S507).

8. Dispositif selon la revendication 7, **caractérisé en ce que** le dispositif pour déterminer si un transfert doit être exécuté est inclus dans le terminal mobile.

9. Dispositif selon la revendication 8, **caractérisé en ce que** le dispositif pour déterminer si un transfert doit être exécuté est inclus dans la station de base.

10. Programme informatique qui peut être directement chargeable dans un dispositif programmable, comportant des instructions ou des parties du code pour mettre en application les étapes de la méthode selon les revendications 1 à 6, quand le programme informatique dit est exécuté sur un dispositif programmable.

11. Message pour déterminer si un transfert doit être exécuté pour un terminal mobile d'un réseau de télécommunication cellulaire sans fil d'une première station de base à une seconde station de base, transféré par le terminal mobile à la première station de base par lequel le terminal mobile est impliqué dans une communication en cours, **caractérisé en ce que** le message comporte des informations représentatives de la variation de la puissance reçue d'un premier signal relatif à la communication en cours et d'informations représentatives de la variation de la puissance reçue d'un second signal transféré par la première station de base et par la seconde station de base.
